# EUROPEAN PATENT APPLICATION

(11) **EP 4 610 863 A1**
(43) Date of publication of application: **03.09.2025**
(21) Application number: 23890207.6
(22) Date of filing: 29.06.2023
(51) Int. Cl.: G06F 21/62

(54) **SENSITIVE DATA RECOGNITION MODEL GENERATION METHOD AND APPARATUS, AND DEVICE AND STORAGE MEDIUM**

(30) Priority: 15.11.2022 CN 202211430654
(71) Applicant: Huawei Technologies Co., Ltd., Shenzhen, Guangdong 518129 (CN)
(72) Inventor: QI, Wenyu, Shenzhen, Guangdong 518129 (CN); BAO, Dewei, Shenzhen, Guangdong 518129 (CN); WEI, Qikun, Shenzhen, Guangdong 518129 (CN); CAO, Yalin, Shenzhen, Guangdong 518129 (CN); HOU, Yujia, Shenzhen, Guangdong 518129 (CN)
(74) Representative: Thun, Clemens
(86) International application number: PCT/CN2023/104074
(87) International publication number: WO 2024/103765

(57) **Abstract**

This application discloses a method and an apparatus for generating a sensitive data identification model, a device, and a storage medium, and pertains to the field of data security. The method includes: obtaining a target sensitive word; and determining a sensitive data identification model corresponding to the target sensitive word, where the sensitive data identification model includes a sensitive word set of the target sensitive word and a sensitivity level and/or a sensitive category corresponding to the sensitive word set, the sensitive word set includes the target sensitive word and a synonym of the target sensitive word, and the sensitive word set is determined based on an industry to which the target sensitive word belongs. In this application, the sensitive word set, and the sensitive category and/or the sensitivity level corresponding to the sensitive word set can be automatically determined based on the target sensitive word, and a user does not need to independently set the sensitive category and the sensitivity level according to a data grading/classification principle in laws and regulations. This reduces difficulty in model generation. In addition, in this application, a sensitive word may be further extended, to improve a sensitive data identification effect, which has a wide application scope.

## Description

This application claims priority to Chinese Patent Application No. 202211430654.9, filed with the China National Intellectual Property Administration on November 15, 2022 and entitled "METHOD AND APPARATUS FOR GENERATING SENSITIVE DATA IDENTIFICATION MODEL, DEVICE, AND STORAGE MEDIUM", which is incorporated herein by reference in its entirety.

### TECHNICAL FIELD

This application relates to the field of data security, and in particular, to a method and an apparatus for generating a sensitive data identification model, a device, and a storage medium.

### BACKGROUND

As services in various industries are migrated online, a leakage risk of personal asset and information security gradually increases. In addition, according to laws and regulations, data needs to be graded/classified to comprehensively ensure data security and legal compliance. However, because an amount of data generated in various industries is extremely large, it is difficult to implement grading/classification completely manually, which is not conducive to identification of sensitive data. Therefore, how to generate a sensitive data identification model becomes an urgent problem to be resolved currently.

In related technologies, a sensitive data grading/classification template is customized for each industry according to different industry specifications, and a sensitive data identification model is built in the template. When the built-in sensitive data identification model cannot meet requirements, a user can add a sensitive data identification model in a user-defined manner by using the customized sensitive data grading/classification template. Data to be configured by the user in a user-defined manner includes a model name, a sensitivity level, an identification rule, and description information. The identification rule is used to set a manner of identifying sensitive data, for example, a regular expression, excluding a keyword, including a keyword, or the like.

However, it is difficult to use the foregoing method, and the method depends on a degree of user's understanding of a data grading/classification principle in laws and regulations. In addition, the foregoing method is applicable only to a simple scenario. In a scenario in which sensitive data is complex and cumbersome, the user needs to consider a large quantity of sensitive words, and it is difficult to comprehensively consider the sensitive words completely manually. Consequently, a sensitive data identification effect is poor.

### SUMMARY

This application provides a method and an apparatus for generating a sensitive data identification model, a device, and a storage medium, to implement sensitive data identification in a complex scenario. The technical solutions are as follows.

According to a first aspect, a method for generating a sensitive data identification model is provided. The method includes: obtaining a target sensitive word; and determining a sensitive data identification model corresponding to the target sensitive word, where the sensitive data identification model includes a sensitive word set of the target sensitive word and a sensitivity level and/or a sensitive category corresponding to the sensitive word set. The sensitive word set includes the target sensitive word and a synonym of the target sensitive word, and the sensitive word set is determined based on an industry to which the target sensitive word belongs.

The sensitive word set of the target sensitive word, and the sensitivity level and/or the sensitive category corresponding to the sensitive word set can be automatically determined based on the target sensitive word, and a user does not need to independently set the sensitive category and the sensitivity level according to a data grading/classification principle in laws and regulations. This reduces difficulty in generating the sensitive data identification model. In addition, the sensitive word set includes the target sensitive word and the synonym of the target sensitive word, and a sensitive word is extended. This improves a sensitive data identification effect, and broadens an application scope.

When the target sensitive word is obtained, a sensitive word input by the user is first obtained. If the sensitive word input by the user includes a plurality of sensitive words and the plurality of sensitive words belong to a same industry, the plurality of sensitive words are determined as the target sensitive word; or if the sensitive word input by the user includes a plurality of sensitive words and the plurality of sensitive words do not belong to a same industry, the plurality of sensitive words are grouped into a plurality of groups, and a same group of sensitive words are determined as the target sensitive word, where the same group of sensitive words belong to a same industry. Optionally, if the sensitive word input by the user includes one sensitive word, the sensitive word is determined as the target sensitive word.

The sensitive words input by the user may belong to different industries, or may belong to a same industry. When these sensitive words belong to different industries, sensitive data identification models determined based on these sensitive words may be different. Therefore, after obtaining the sensitive word input by the user, an electronic device needs to determine whether the sensitive word input by the user includes one sensitive word or a plurality of sensitive words. When the sensitive word input by the user includes one sensitive word, the sensitive word belongs to only one industry. Therefore, industry classification is not required. When the sensitive word input by the user includes a plurality of sensitive words, industries to which the plurality of sensitive words respectively belong need to be determined, to determine whether the plurality of sensitive words belong to a same industry, and further process sensitive words in different industries separately. In this way, accuracy of the generated sensitive data identification model can be ensured.

After the target sensitive word is obtained, to determine the sensitive data identification model corresponding to the target sensitive word, the sensitive word set of the target sensitive word and the sensitivity level and/or the sensitive category corresponding to the sensitive word set may be determined.

First, synonym mining is performed based on the target sensitive word and the industry to which the target sensitive word belongs, to obtain the synonym of the target sensitive word. The target sensitive word and the synonym of the target sensitive word are used as the sensitive word set.

In an example, a word vector of the target sensitive word is determined; word vectors of a plurality of candidate words are obtained from a word vector library based on the industry to which the target sensitive word belongs; and the synonym of the target sensitive word is determined based on the word vector of the target sensitive word and the word vectors of the plurality of candidate words.

Optionally, before the word vectors of the plurality of candidate words are obtained from the word vector library based on the industry to which the target sensitive word belongs, the industry to which the target sensitive word belongs may alternatively be determined first. The target sensitive word is determined based on the sensitive word input by the user, and the sensitive word input by the user may include one sensitive word, or may include a plurality of sensitive words. When the sensitive word input by the user includes one sensitive word, the electronic device needs to determine an industry to which the sensitive word input by the user belongs, and then use the industry as the industry to which the target sensitive word belongs. When the sensitive word input by the user includes a plurality of sensitive words, the electronic device may directly determine, based on an industry determined based on each sensitive word, the industry to which the target sensitive word belongs.

The word vector library may include word vectors of words in a plurality of industries. Therefore, in this case, the electronic device may obtain, from the word vector library based on the industry to which the target sensitive word belongs, a word vector of a word belonging to the industry, to obtain the word vectors of the plurality of candidate words.

In an example, a similarity between the target sensitive word and each of the plurality of candidate words is determined based on the word vector of the target sensitive word and the word vectors of the plurality of candidate words, to obtain a plurality of similarities; at least one candidate word is selected from the plurality of candidate words as a candidate synonym of the target sensitive word based on the plurality of similarities; and the synonym of the target sensitive word is determined based on the candidate synonym of the target sensitive word.

The electronic device may determine, based on the word vector of the target sensitive word and the word vectors of the plurality of candidate words, similarities between the word vector of the target sensitive word and the word vectors of the plurality of candidate words according to a similarity algorithm. In addition, when the target sensitive word includes a plurality of sensitive words, a similarity between a word vector of each sensitive word and each of the word vectors of the plurality of candidate words needs to be determined according to the similarity algorithm.

When the candidate synonym of the target sensitive word is selected from the plurality of candidate words, at least one candidate word whose similarity is greater than a similarity threshold may be selected from the plurality of candidate words as the candidate synonym of the target sensitive word based on the plurality of similarities. Optionally, first N candidate words may alternatively be selected from the plurality of candidate words in descending order of similarities as candidate synonyms of the target sensitive word. In addition, when the target sensitive word includes a plurality of sensitive words, a candidate synonym of each sensitive word needs to be determined based on a same method.

Then, K candidate synonyms are determined from the candidate synonyms of the target sensitive word, where K is an integer greater than 1; the K candidate synonyms are displayed; and a candidate synonym selected by the user from the K candidate synonyms is obtained, and the candidate synonym selected by the user is used as the synonym of the target sensitive word.

When the target sensitive word includes one sensitive word, first K candidate synonyms may be selected from the candidate synonyms of the target sensitive word in descending order of similarities between the target sensitive word and the candidate synonyms of the target sensitive word.

When the target sensitive word includes a plurality of sensitive words, deduplication and frequency statistics are performed on candidate synonyms of the plurality of sensitive words, to obtain a plurality of candidate synonyms and an occurrence frequency of each candidate synonym; similarities corresponding to the plurality of candidate synonyms are corrected; and the K candidate synonyms are determined from the plurality of candidate synonyms based on corrected similarities corresponding to the plurality of candidate synonyms and the occurrence frequency of each candidate synonym.

For any one of the plurality of candidate synonyms obtained through deduplication, the candidate synonym may appear in candidate synonyms of at least two sensitive words, or may appear in candidate synonyms of one sensitive word. When the candidate synonym appears in candidate synonyms of at least two sensitive words, a similarity corresponding to the candidate synonym may be corrected based on a similarity between the candidate synonym and each of the at least two sensitive words. When the candidate synonym appears in candidate synonyms of one sensitive word, a similarity between the candidate synonym and the sensitive word may be directly determined as a corrected similarity corresponding to the candidate synonym.

The plurality of candidate synonyms are sorted in descending order of occurrence frequencies based on the corrected similarities corresponding to the plurality of candidate synonyms and the occurrence frequency of each candidate synonym, and then a sorting result of the plurality of candidate synonyms is adjusted based on a similarity corresponding to each candidate synonym. The first K candidate synonyms are selected from the plurality of candidate synonyms based on an adjusted sorting result. Then, the electronic device displays the K candidate synonyms to the user. The user may perform selection based on a requirement, and use the candidate synonym selected by the user as the synonym of the target sensitive word.

In this application, synonym mining is performed on the target sensitive word, and a case in which the target sensitive word includes one or more sensitive words is separately processed, to avoid repetition, and ensure comprehensiveness of the sensitive words, so that the user does not need to brainstorm a large quantity of sensitive words. Therefore, this application is not only applicable to a simple scenario, but also applicable to a scenario in which sensitive data is complex and cumbersome.

After the sensitive word set of the target sensitive word is obtained, the sensitive category corresponding to the sensitive word set is determined based on the industry to which the target sensitive word belongs; and the sensitivity level corresponding to the sensitive word set is determined based on the sensitive category corresponding to the sensitive word set.

A plurality of candidate sensitive categories are obtained from an industry sensitive data grading/classification library based on the industry to which the target sensitive word belongs; the plurality of candidate sensitive categories are displayed; and a candidate sensitive category selected by a user from the plurality of candidate sensitive categories is obtained, and the candidate sensitive category selected by the user is used as the sensitive category corresponding to the sensitive word set.

Because sensitive categories of a plurality of industries may be stored in the industry sensitive data grading/classification library, the electronic device may obtain, based on the industry to which the target sensitive word belongs, sensitive categories corresponding to the industries from the industry sensitive data grading/classification library as the plurality of candidate sensitive categories. Then, the electronic device may display the plurality of candidate sensitive categories for selection by the user. In other words, the electronic device recommends the plurality of candidate sensitive categories to the user, and the user only needs to select, from the recommended candidate sensitive categories based on a data security requirement of the user, the sensitive category corresponding to the sensitive word set, and does not need to independently set a sensitive category according to a data grading/classification principle in laws and regulations. This reduces difficulty in generating the sensitive data identification model.

A sensitivity level corresponding to the sensitive category is displayed; and a sensitivity level obtained by adjusting the sensitivity level by the user is obtained, and the sensitivity level obtained through the adjustment by the user is used as the sensitivity level corresponding to the sensitive word set.

A sensitivity level corresponding to each sensitive category is stored in the industry sensitive data grading/classification library. The electronic device may obtain, based on the sensitive category corresponding to the sensitive word set, the sensitivity level corresponding to the sensitive category from the industry sensitive data grading/classification library, and display the sensitivity level corresponding to the sensitive category. The user may independently determine importance of the target sensitive word, to adjust the sensitivity level correspondingly. This improves flexibility of the method.

Optionally, the sensitive data identification model further includes an identification rule. In this case, a plurality of candidate identification rules may be obtained from the industry sensitive data grading/classification library; the plurality of candidate identification rules are displayed; and a candidate identification rule selected by the user from the plurality of candidate identification rules is obtained, and the candidate identification rule selected by the user is used as the identification rule included in the sensitive data identification model.

A plurality of identification rules corresponding to each sensitive category are stored in the industry sensitive data grading/classification library. Therefore, the electronic device may obtain, from the industry sensitive data grading/classification library, a plurality of identification rules corresponding to the sensitive category of the sensitive word set of the target sensitive word, and then use the plurality of identification rules as the plurality of candidate identification rules. Optionally, the electronic device may further automatically set, based on the sensitive word set of the target sensitive word, a plurality of identification rules corresponding to the sensitive word set, and then use the plurality of identification rules as the plurality of candidate identification rules. Then, the electronic device may display the plurality of candidate identification rules, so that the user selects, based on a requirement of the user, a required candidate identification rule as the identification rule included in the sensitive data identification model. In this way, the user does not need to independently fill in the identification rule, and only needs to select, based on a requirement, an identification rule recommended by the electronic device. This reduces difficulty in model generation, and is also applicable to the scenario in which sensitive data is complex and cumbersome.

According to a second aspect, an apparatus for generating a sensitive data identification model is provided. The apparatus for generating a sensitive data identification model has a function of implementing behavior in the method for generating a sensitive data identification model in the first aspect. The apparatus for generating a sensitive data identification model includes at least one module, and the at least one module is configured to implement the method for generating a sensitive data identification model provided in the first aspect.

According to a third aspect, an electronic device is provided. The electronic device includes a processor and a memory, and the memory is configured to store a computer program for performing the method for generating a sensitive data identification model provided in the first aspect. The processor is configured to execute the computer program stored in the memory, to implement the method for generating a sensitive data identification model according to the first aspect.

Optionally, the electronic device may further include a communication bus, and the communication bus is configured to establish a connection between the processor and the memory.

According to a fourth aspect, a computer-readable storage medium is provided. The storage medium stores instructions, and when the instructions are run on a computer, the computer is enabled to perform steps of the method for generating a sensitive data identification model according to the first aspect.

According to a fifth aspect, a computer program product including instructions is provided. When the instructions are run on a computer, the computer is enabled to perform steps of the method for generating a sensitive data identification model according to the first aspect. Alternatively, a computer program is provided. When the computer program is run on a computer, the computer is enabled to perform steps of the method for generating a sensitive data identification model according to the first aspect.

Technical effects achieved in the second aspect, the third aspect, the fourth aspect, and the fifth aspect are similar to those achieved by corresponding technical means in the first aspect. Details are not described again herein.

### BRIEF DESCRIPTION OF DRAWINGS

FIG. 1 is a flowchart of a method for generating a sensitive data identification model according to an embodiment of this application;
FIG. 2 is a flowchart of performing synonym mining on a target sensitive word according to an embodiment of this application;
FIG. 3 is a diagram of determining a sensitive category corresponding to a sensitive word set according to an embodiment of this application;
FIG. 4 is a diagram of a structure of an apparatus for generating a sensitive data identification model according to an embodiment of this application; and
FIG. 5 is a diagram of a structure of an electronic device according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a method for generating a sensitive data identification model according to embodiments of this application is described in detail, an application scenario in embodiments of this application is first described.

Sensitive data identification and grading/classification are core content of data security. Different types of data are discriminated, and sensitive data in the different types of data is identified and graded/classified, to comprehensively ensure data security and legal compliance. However, currently, most data generated in various industries features a large capacity and is complex. Traditionally, a speed of manual data grading/classification is low, which is far less efficient than automatic identification by using a model. In addition, a person may determine same sensitive data differently at different time points, and different persons may also determine same sensitive data differently, so that results generated during identification of the sensitive data may be different due to this subjectivity. This increases a risk of data leakage, and brings harm to individuals, enterprises, and even society.

Currently, a use range of a sensitive identification model of each industry that is built in an industry sensitive data grading/classification template is limited. Therefore, embodiments of this application provide a method for generating a sensitive data identification model, which does not depend on user's understanding of a data grading/classification principle in laws and regulations, and may further extend a sensitive word, to improve a sensitive data identification effect. In addition, the user does not need to independently fill in an identification rule. This reduces difficulty of model generation. In addition, the solutions provided in embodiments of this application are not only applicable to a simple scenario, but also applicable to a scenario in which sensitive data is complex and cumbersome, and have a wide application scope.

The method for generating a sensitive data identification model according to embodiments of this application may be executed by an electronic device. The electronic device may be any electronic device that can perform human-machine interaction with a user through one or more of a keyboard, a touchpad, a touchscreen, a remote control, a voice interaction device, a handwriting device, or the like. For example, the electronic device may be a personal computer (Personal Computer, PC), a mobile phone, a personal digital assistant (Personal Digital Assistant, PDA), a pocket personal computer PPC (Pocket PC), a tablet computer, a smart television, a smart speaker, or the like.

It should be noted that a person skilled in the art should understand that the foregoing application scenario and electronic device are merely examples. If another existing or possible future application scenario and electronic device are applicable to embodiments of this application, the application scenario and the electronic device should also fall within the protection scope of embodiments of this application, and are included herein by reference. In other words, the foregoing application scenario and electronic device are intended to describe the technical solutions in embodiments of this application more clearly, but constitute no limitation on the technical solutions provided in embodiments of this application. A person of ordinary skill in the art may learn that, with emergence of a new application scenario and evolution of the electronic device, the technical solutions provided in embodiments of this application are also applicable to a similar technical problem.

The following describes a method for generating a sensitive data identification model according to embodiments of this application.

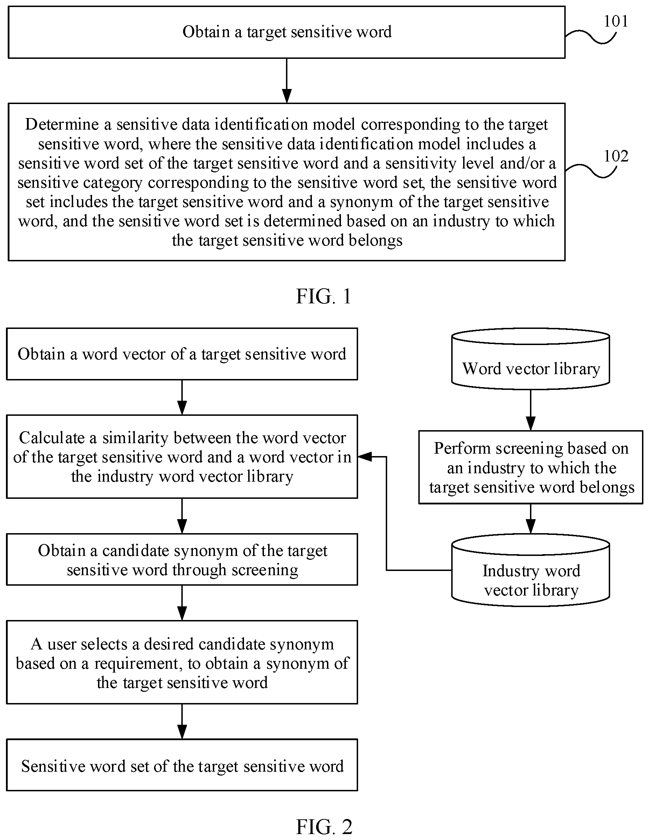

FIG. 1 is a flowchart of a method for generating a sensitive data identification model according to an embodiment of this application. The method is applied to an electronic device. The method includes the following steps.

Step 101: Obtain a target sensitive word.

A sensitive word input by a user is obtained. If the sensitive word input by the user includes a plurality of sensitive words and the plurality of sensitive words belong to a same industry, the plurality of sensitive words are determined as the target sensitive word; or if the sensitive word input by the user includes a plurality of sensitive words and the plurality of sensitive words do not belong to a same industry, the plurality of sensitive words are grouped into a plurality of groups, and a same group of sensitive words are determined as the target sensitive word, where the same group of sensitive words belong to a same industry. Optionally, if the sensitive word input by the user includes one sensitive word, the sensitive word is determined as the target sensitive word.

In some embodiments, the electronic device displays a user interface, and the user interface includes a sensitive word input area. The user may input a sensitive word in the sensitive word input area, and the electronic device obtains the sensitive word input by the user in the sensitive word input area.

The sensitive words input by the user may belong to different industries, or may belong to a same industry. When these sensitive words belong to different industries, sensitive data identification models determined based on these sensitive words may be different. Therefore, after obtaining the sensitive word input by the user, the electronic device needs to determine whether the sensitive word input by the user includes one sensitive word or a plurality of sensitive words. When the sensitive word input by the user includes one sensitive word, the sensitive word belongs to only one industry. Therefore, industry classification is not required, and the sensitive word may be directly determined as the target sensitive word. When the sensitive word input by the user includes a plurality of sensitive words, industries to which the plurality of sensitive words respectively belong need to be determined, to determine whether the plurality of sensitive words belong to a same industry, and further process sensitive words in different industries separately. In other words, if the plurality of sensitive words belong to a same industry, the plurality of sensitive words are directly determined as the target sensitive word. If the plurality of sensitive words do not belong to a same industry, sensitive words belonging to a same industry are classified into one group based on industries to which the plurality of sensitive words belong, to obtain a plurality of groups of sensitive words, and a same group of sensitive words in the plurality of groups of sensitive words are determined as the target sensitive word. In this way, a plurality of target sensitive words can be determined.

The electronic device may determine, according to a related algorithm, an industry to which the sensitive word belongs. For example, the related algorithm may be a random forest vocabulary classification algorithm, or may be another algorithm. This is not limited in embodiments of this application. In addition, the plurality of target sensitive words may be determined based on the foregoing method. Because methods for determining sensitive data identification models corresponding to all the target sensitive words are the same, the following uses one of the target sensitive words as an example for description.

Step 102: Determine a sensitive data identification model corresponding to the target sensitive word, where the sensitive data identification model includes a sensitive word set of the target sensitive word and a sensitivity level and/or a sensitive category corresponding to the sensitive word set. The sensitive word set includes the target sensitive word and a synonym of the target sensitive word, and the sensitive word set is determined based on an industry to which the target sensitive word belongs.

After the target sensitive word is obtained, to determine the sensitive data identification model corresponding to the target sensitive word, the sensitive word set of the target sensitive word and the sensitivity level and/or the sensitive category corresponding to the sensitive word set may be determined. The following separately describes processes of determining the sensitive word set of the target sensitive word, and the sensitivity level and the sensitive category that correspond to the sensitive word set.

(1) Synonym mining is performed based on the target sensitive word and the industry to which the target sensitive word belongs, to obtain the synonym of the target sensitive word. The target sensitive word and the synonym of the target sensitive word are used as the sensitive word set.

In some embodiments, a word vector of the target sensitive word is determined. Word vectors of a plurality of candidate words are obtained from a word vector library based on the industry to which the target sensitive word belongs. The synonym of the target sensitive word is determined based on the word vector of the target sensitive word and the word vectors of the plurality of candidate words.

The electronic device stores the word vector library, and the word vector library includes word vectors of a plurality of words. Therefore, the electronic device may query the word vector library for the word vector of the target sensitive word. Certainly, in an actual application, the word vector of the target sensitive word may be alternatively determined based on another method. For example, the electronic device determines the word vector of the target sensitive word according to a related algorithm.

Based on the foregoing description, the target sensitive word may include one sensitive word, or may include a plurality of sensitive words. If the target sensitive word includes one sensitive word, one word vector may be determined. If the target sensitive word includes a plurality of sensitive words, a plurality of word vectors may be determined.

The word vector library may include word vectors of words in a plurality of industries. In this case, the electronic device may obtain, from the word vector library based on the industry to which the target sensitive word belongs, a word vector of a word belonging to the industry, to obtain the word vectors of the plurality of candidate words.

The word vector library is preset. Word vectors of various words in the word vector library may be obtained through training by a word2vec model, or may be obtained through training by another model. This is not limited in embodiments of this application.

Optionally, before the word vectors of the plurality of candidate words are obtained from the word vector library based on the industry to which the target sensitive word belongs, the industry to which the target sensitive word belongs may alternatively be determined. The target sensitive word is determined based on the sensitive word input by the user, and the sensitive word input by the user may include one sensitive word, or may include a plurality of sensitive words. When the sensitive word input by the user includes one sensitive word, the electronic device needs to determine an industry to which the sensitive word input by the user belongs, and then use the industry as the industry to which the target sensitive word belongs. When the sensitive word input by the user includes a plurality of sensitive words, the electronic device may directly determine, based on the industry determined in step 101, the industry to which the target sensitive word belongs.

When the sensitive word input by the user includes one sensitive word, the electronic device may determine, according to a related algorithm, the industry to which the sensitive word input by the user belongs, and then use the industry as the industry to which the target sensitive word belongs. Certainly, after determining, according to the related algorithm, the industry to which the sensitive word input by the user belongs, the electronic device may further display the user interface. The user interface includes the industry determined by the electronic device according to the related algorithm. The user may adjust the industry, so that the electronic device obtains an industry adjusted by the user, and uses the industry adjusted by the user as the industry to which the target sensitive word belongs.

When the sensitive word input by the user includes a plurality of sensitive words, because the industry of the same group of sensitive words used as the target sensitive word is determined in step 101, in this case, the industry of the group of sensitive words may be directly used as the industry to which the target sensitive word belongs. Certainly, the electronic device may alternatively display the user interface. The user interface includes the industry of the group of sensitive words. The user may adjust the industry, so that the electronic device obtains an industry adjusted by the user, and uses the industry adjusted by the user as the industry to which the target sensitive word belongs.

In this embodiment of this application, the electronic device may determine, based on the foregoing method, the industry to which the target sensitive word belongs, and may also determine, based on another method, the industry to which the target sensitive word belongs. For example, the electronic device may directly display the user interface, the user interface includes an industry input area of the target sensitive word, and the user may input, in the industry input area, the industry to which the target sensitive word belongs, so that the electronic device can obtain the industry to which the target sensitive word belongs.

An implementation process of determining the synonym of the target sensitive word based on the word vector of the target sensitive word and the word vectors of the plurality of candidate words includes: determining a similarity between the target sensitive word and each of the plurality of candidate words based on the word vector of the target sensitive word and the word vectors of the plurality of candidate words, to obtain a plurality of similarities; selecting at least one candidate word from the plurality of candidate words as a candidate synonym of the target sensitive word based on the plurality of similarities; and determining the synonym of the target sensitive word based on the candidate synonym of the target sensitive word.

The electronic device may determine, based on the word vector of the target sensitive word and the word vectors of the plurality of candidate words, similarities between the word vector of the target sensitive word and the word vectors of the plurality of candidate words according to a similarity algorithm. In addition, when the target sensitive word includes a plurality of sensitive words, a similarity between a word vector of each sensitive word and each of the word vectors of the plurality of candidate words needs to be determined according to the similarity algorithm. The similarity algorithm may be a cosine similarity algorithm, or may be another similarity algorithm. This is not limited in embodiments of this application.

When the candidate synonym of the target sensitive word is selected from the plurality of candidate words, at least one candidate word whose similarity is greater than a similarity threshold may be selected from the plurality of candidate words as the candidate synonym of the target sensitive word based on the plurality of similarities. Optionally, first N candidate words may alternatively be selected from the plurality of candidate words in descending order of similarities as candidate synonyms of the target sensitive word. In addition, when the target sensitive word includes a plurality of sensitive words, a candidate synonym of each sensitive word needs to be determined based on a same method.

The similarity threshold is preset. For example, the similarity threshold may be 0.6, and may be different values based on different requirements. This is not limited in embodiments of this application. Optionally, N is also preset. N is an integer greater than 1, for example, N=20, and may be different values based on different requirements. This is not limited in embodiments of this application.

An implementation process of determining the synonym of the target sensitive word based on the candidate synonym of the target sensitive word includes: determining K candidate synonyms from the candidate synonyms of the target sensitive word, where K is an integer greater than 1; displaying the K candidate synonyms; and obtaining a candidate synonym selected by the user from the K candidate synonyms, and using the candidate synonym selected by the user as the synonym of the target sensitive word.

When the target sensitive word includes one sensitive word, first K candidate synonyms may be selected from the candidate synonyms of the target sensitive word in descending order of similarities between the target sensitive word and the candidate synonyms of the target sensitive word.

When the target sensitive word includes a plurality of sensitive words, deduplication and frequency statistics may be performed on candidate synonyms of the plurality of sensitive words, to obtain a plurality of candidate synonyms and an occurrence frequency of each candidate synonym. Similarities corresponding to the plurality of candidate synonyms are corrected. The K candidate synonyms are determined from the plurality of candidate synonyms based on corrected similarities corresponding to the plurality of candidate synonyms and the occurrence frequency of each candidate synonym.

For any one of the plurality of candidate synonyms obtained through deduplication, the candidate synonym may appear in candidate synonyms of at least two sensitive words, or may appear in candidate synonyms of one sensitive word. When the candidate synonym appears in candidate synonyms of at least two sensitive words, a similarity corresponding to the candidate synonym may be corrected based on a similarity between the candidate synonym and each of the at least two sensitive words. When the candidate synonym appears in candidate synonyms of one sensitive word, a similarity between the candidate synonym and the sensitive word may be directly determined as a corrected similarity corresponding to the candidate synonym.

When the similarity corresponding to the candidate synonym is corrected based on the similarity between the candidate synonym and each of the at least two sensitive words, the similarity may be corrected in an arithmetic average manner, or may be corrected in a weighted average manner. Certainly, another method may be used. This is not limited in embodiments of this application.

When the K candidate synonyms are determined from the plurality of candidate synonyms based on the corrected similarities corresponding to the plurality of candidate synonyms and the occurrence frequency of each candidate synonym, the plurality of candidate synonyms may be first sorted in descending order of occurrence frequencies, and then a sorting result of the plurality of candidate synonyms may be adjusted based on a similarity corresponding to each candidate synonym. Then, the first K candidate synonyms are selected from the plurality of candidate synonyms based on an adjusted sorting result. There are a plurality of manners of adjusting the sorting result of the plurality of candidate synonyms based on the similarity corresponding to each candidate synonym. This is not limited in embodiments of this application.

After determining the K candidate synonyms by using the foregoing method, the electronic device displays the K candidate synonyms to the user. The user may select the K candidate synonyms based on a requirement, and use the candidate synonym selected by the user as the synonym of the target sensitive word. Optionally, the K candidate synonyms may alternatively be directly determined as synonyms of the target sensitive word.

K is an integer greater than 1, and the user may preset different values based on different requirements, for example, K=5 or K=10. This is not limited in embodiments of this application.

FIG. 2 is a flowchart of performing synonym mining on a target sensitive word according to an embodiment of this application. First, the word vector of the target sensitive word is obtained. Then, the word vector library is screened based on the industry to which the target sensitive word belongs, to obtain the word vectors of the plurality of candidate words. The word vectors of the plurality of candidate words form an industry word vector library. Then, a similarity between the word vector of the target sensitive word and a word vector in the industry word vector library is calculated, and a candidate synonym of the target sensitive word is obtained through screening based on the calculated similarity. When the target sensitive word includes a plurality of sensitive words, deduplication and frequency statistics may be performed on candidate synonyms of the plurality of sensitive words, to obtain a plurality of candidate synonyms and an occurrence frequency of each candidate synonym. Then, the similarities corresponding to the plurality of candidate synonyms are corrected, the K candidate synonyms are obtained through screening based on corrected similarities corresponding to the plurality of candidate synonyms and the occurrence frequency of each candidate synonym, and the K candidate synonyms are displayed. The user may select a desired candidate synonym from the K candidate synonyms based on a requirement, to obtain the synonym of the target sensitive word, and then use the target sensitive word and the synonym of the target sensitive word as the sensitive word set.

(2) The sensitive category corresponding to the sensitive word set is determined based on the industry to which the target sensitive word belongs. The sensitivity level corresponding to the sensitive word set is determined based on the sensitive category corresponding to the sensitive word set.

An implementation process of determining, based on the industry to which the target sensitive word belongs, the sensitive category corresponding to the sensitive word set includes: obtaining a plurality of candidate sensitive categories from an industry sensitive data grading/classification library based on the industry to which the target sensitive word belongs, displaying the plurality of candidate sensitive categories, obtaining a candidate sensitive category selected by the user from the plurality of candidate sensitive categories, and using the candidate sensitive category selected by the user as the sensitive category corresponding to the sensitive word set.

Sensitive categories of a plurality of industries may be stored in the industry sensitive data grading/classification library. The electronic device may obtain, based on the industry to which the target sensitive word belongs, sensitive categories corresponding to the industries from the industry sensitive data grading/classification library, and then use the sensitive categories corresponding to the industries as the plurality of candidate sensitive categories. Certainly, some sensitive categories in the sensitive categories corresponding to the industries may alternatively be used as the plurality of candidate sensitive categories.

The industry sensitive data grading/classification library is preset. The industry sensitive data grading/classification library includes a plurality of sensitive data identification models, and the plurality of sensitive data identification models may belong to different industries. Each sensitive data identification model may include a sensitive category, a sensitivity level, and a sensitive word set. In this way, the electronic device may obtain a sensitive category that is included in each sensitive data identification model and that is of the industry to which the target sensitive word belongs, to obtain the sensitive category corresponding to the industry.

Optionally, the sensitive data identification model may further include a parameter like a model name and an identification rule. This is not limited in embodiments of this application. For example, Table 1 is an example of a sensitive data identification model in a sensitive data grading/classification library in a financial industry according to this embodiment of this application.

**Table 1**

| Model name | Sensitivity level | Sensitive category | Sensitive word set | Identification rule |
|---|---|---|---|---|
| Card verification code | 4 | Authentication information | Verification code and security code | \d{3} |

For different industries, the sensitive category can be classified into a plurality of hierarchies based on industry regulations. In other words, the sensitive category included in each sensitive data identification model in the industry sensitive data grading/classification library has a corresponding hierarchy. For example, the sensitive category is classified into four hierarchies, and the sensitive category is gradually refined from a first hierarchy to a fourth hierarchy. In this way, after the sensitive category corresponding to the industry to which the target sensitive word belongs is obtained from the industry sensitive data grading/classification library, sensitive categories at one of the hierarchies may be used as the plurality of candidate sensitive categories. For example, a sensitive category at a second hierarchy is used as the candidate sensitive category. Certainly, a sensitive category at another hierarchy may alternatively be selected based on different requirements. This is not limited in embodiments of this application.

After obtaining the plurality of candidate sensitive categories, the electronic device may display the plurality of candidate sensitive categories for selection by the user. The user may select one or more candidate sensitive categories from the plurality of candidate sensitive categories based on a requirement of the user. The electronic device obtains the candidate sensitive category selected by the user, and determines the candidate category selected by the user as the sensitive category corresponding to the sensitive word set.

An implementation process of determining the sensitivity level corresponding to the sensitive word set based on the sensitive category corresponding to the sensitive word set includes: displaying a sensitivity level of the sensitive category corresponding to the sensitive word set, obtaining a sensitivity level obtained by adjusting the sensitivity level by the user, and using, as the sensitivity level corresponding to the sensitive word set, the sensitivity level obtained through the adjustment by the user. Optionally, the user may alternatively not adjust the sensitivity level, and directly use the sensitivity level of the sensitive category corresponding to the sensitive word set as the sensitivity level corresponding to the sensitive word set.

A sensitivity level corresponding to each sensitive category is stored in the industry sensitive data grading/classification library. The electronic device may obtain, based on the sensitive category corresponding to the sensitive word set, the sensitivity level corresponding to the sensitive category from the industry sensitive data grading/classification library, and display the sensitivity level corresponding to the sensitive category. Certainly, the electronic device may alternatively obtain the sensitivity level corresponding to the sensitive category based on another method. For example, the electronic device stores a correspondence between an affected object or an impact degree and a sensitivity level when a sensitive word is leaked. The user may select, based on determining of the user, an affected object and an impact degree when a sensitive word in the sensitive word set is leaked, so that the electronic device obtains, based on the affected object and the impact degree selected by the user, a corresponding sensitivity level from the stored correspondence between the affected object or the impact degree and the sensitivity level, and displays the sensitivity level corresponding to the sensitive category.

The correspondence between the affected object or the impact degree and the sensitivity level is preset. In addition, the affected object indicates an object that is affected after data security is broken, and may include an individual, an enterprise, or the like. The impact degree indicates an extent of impact generated after data security is broken, and the impact degree may be classified into severe damage, general damage, minor damage, and no damage in descending order.

After the electronic device displays the sensitivity level corresponding to the sensitive category to the user, the user may independently determine importance of the target sensitive word, to correspondingly adjust the sensitivity level, and use an adjusted sensitivity level as the sensitivity level corresponding to the sensitive word set. The sensitivity level obtained based on the foregoing method may be a lowest sensitivity level, and the user may adjust the sensitivity level upward.

Optionally, the sensitive data identification model may further include an identification rule. To be specific, the sensitive data identification model includes the sensitive word set of the target sensitive word, the sensitivity level and/or the sensitive category corresponding to the sensitive word set, and the identification rule.

An implementation process of determining the identification rule included in the sensitive data identification model includes: obtaining a plurality of candidate identification rules from the industry sensitive data grading/classification library, displaying the plurality of candidate identification rules, obtaining a candidate identification rule selected by the user from the plurality of candidate identification rules, and using the candidate identification rule selected by the user as the identification rule included in the sensitive data identification model.

In some embodiments, a plurality of identification rules corresponding to each sensitive category are stored in the industry sensitive data grading/classification library. Therefore, the electronic device may obtain, from the industry sensitive data grading/classification library, a plurality of identification rules corresponding to the sensitive category of the sensitive word set of the target sensitive word, and then use the plurality of identification rules as the plurality of candidate identification rules.

In some other embodiments, the electronic device may automatically set, based on the sensitive word set of the target sensitive word, a plurality of identification rules corresponding to the sensitive word set, and then use the plurality of identification rules as the plurality of candidate identification rules.

After obtaining the plurality of candidate identification rules, the electronic device may display the plurality of candidate identification rules for selection by the user. The user may select one or more candidate identification rules from the plurality of candidate identification rules based on a requirement of the user. The electronic device obtains the candidate identification rule selected by the user, and determines the candidate identification rule selected by the user as the identification rule included in the sensitive data identification model.

The identification rule may include a regular expression, a dictionary, and the like. The regular expression is described by using a rule string, and the rule string indicates a syntactic rule. If a piece of data complies with the syntactic rule indicated by the rule string, it indicates that the piece of data hits the regular expression. For example, a regular expression in Table 1 is described by using a rule string "\d{3}", and the rule string indicates that three digits may be matched, for example, "010". The dictionary is a collection of words with specific attributes. If a piece of data hits a word in the dictionary, it indicates that the piece of data hits the dictionary, for example, a common Chinese name dictionary.

Optionally, the sensitive data identification model may further include a model name. The electronic device may display a user interface, and the user interface includes a model name input box. The user may input a desired model name in the model name input box based on a requirement of the user. The electronic device obtains the model name input by the user, and uses the model name as the model name of the sensitive data identification model. Optionally, the user may not input the model name. In this case, the electronic device uses the target sensitive word as the model name of the sensitive data identification model by default. This is not limited in embodiments of this application.

After determining the sensitive data identification model corresponding to the target sensitive word, the electronic device may further store the sensitive data identification model corresponding to the target sensitive word in a user sensitive data grading/classification library. In other words, the user sensitive data grading/classification library includes a plurality of sensitive data identification models, and the plurality of sensitive data identification models may be generated based on the foregoing method.

After the sensitive data identification model is generated based on the foregoing method, sensitive data may be identified by using the sensitive data identification models in the industry sensitive data grading/classification library and the user sensitive data grading/classification library. The following describes a process of identifying the sensitive data.
(1) To-be-identified user data is obtained.
   The user data may be a plurality of types of data like a to-be-identified data document and table.
(2) A sensitive data grading/classification result of the user data is determined.

A keyword in the user data is extracted. The keyword in the user data is matched with the sensitive data identification models in the industry sensitive data grading/classification library and the user sensitive data grading/classification library, to determine a sensitive data identification model hit by the keyword. A sensitivity level and/or a sensitive category included in the sensitive data identification model hit by the keyword are/is used as the sensitive data grading/classification result of the user data. In other words, after the keyword in the user data is extracted, the keyword is matched with the sensitive data identification model in the industry sensitive data grading/classification library and with the sensitive data identification model in the user sensitive data grading/classification library, then all sensitive data identification models that can match the keyword are used as sensitive data identification models hit by the keyword, and then the sensitivity level and/or the sensitive category included in the sensitive data identification model hit by the keyword are/is used as the sensitive data grading/classification result of the user data.

The user data may include structured data, or may include unstructured data. The structured data and the unstructured data are identified in different manners. Therefore, before the keyword in the user data is extracted, the user data may be further classified based on different structures, to obtain the structured data and the unstructured data in the user data.

Because the structured data is data logically expressed by using a two-dimensional table, the electronic device may obtain column names in the structured data, to extract a keyword in the column names. Further, the keyword in the column name is matched, by using a keyword matching method, with a sensitive word set included in the sensitive data identification models in the industry sensitive data grading/classification library and the user sensitive data grading/classification library. If the keyword in the column name matches any word in a sensitive word set included in a sensitive data identification model, it indicates that the keyword in the column name hits the sensitive data identification model.

Optionally, the electronic device may further match the sensitive data identification model with reference to the regular expression and the dictionary. For example, the keyword matching method is used to determine that the keyword in the column name matches any word in a sensitive word set included in a sensitive data identification model. However, specific content in the column name may not correspond to the column name. In this case, the specific content may be matched with reference to the regular expression and the dictionary. This is not limited in embodiments of this application.

The unstructured data has no fixed structure, and may include documents, texts, images, and the like in various formats. Therefore, the electronic device may obtain texts in the unstructured data, to extract a keyword in the texts. Further, the keyword in the text is matched, by using a keyword matching method, with a sensitive word set included in the sensitive data identification models in the industry sensitive data grading/classification library and the user sensitive data grading/classification library. If the keyword in the text matches any word in a sensitive word set included in a sensitive data identification model, it indicates that the keyword in the text hits the sensitive data identification model.

Optionally, the electronic device may further match the sensitive data identification model with reference to the regular expression, the dictionary, and a named entity recognition (Named Entity Recognition, NER) method. For example, the keyword in the text includes "name", but the word "name" is not sensitive data. A sensitive data identification model may not be matched by using the keyword matching method. In this case, a specific person name may be matched with reference to a regular expression of a specific person name or a common name dictionary. Optionally, the specific person name may be further matched with reference to the NER method. The NER method may determine different types of words in a text segment, to recognize "Xiaoming" in the text that is the specific person name. This is not limited in embodiments of this application.

Because all of the sensitive data identification models hit by the user data include the sensitivity level and/or the sensitive category, the sensitivity level and/or the sensitive category included in the hit sensitive data identification model may be directly used as the sensitive data grading/classification result.

After the sensitive data grading/classification result of the user data is determined, the sensitive data grading/classification result may be further displayed. In other words, the electronic device displays a sensitive category and/or a sensitivity level of sensitive data in the user data. Optionally, the electronic device may further display a distribution status of the sensitive data in the user data for reference by the user. The distribution status of the sensitive data indicates a distribution proportion of the sensitivity level of the sensitive data in the user data. For example, in the user data, sensitive data whose sensitivity level is 2 accounts for 50% of all the sensitive data, and sensitive data whose sensitivity level is 3 accounts for 30% of all the sensitive data.

In this embodiment of this application, a plurality of candidate sensitive categories can be obtained from an industry sensitive data grading/classification library by using an industry to which a target sensitive word belongs, so as to recommend the plurality of candidate sensitive categories to a user. In this way, the user only needs to select a sensitive category corresponding to a sensitive word set from the recommended candidate sensitive categories based on a data security requirement of the user, and then uses a sensitivity level corresponding to the sensitive category as a sensitivity level corresponding to the sensitive word set, and the user does not need to independently set the sensitive category and the sensitivity level according to a data grading/classification principle in laws and regulations. This reduces difficulty in generating a sensitive data identification model. In addition, the method in this embodiment of this application may further extend the target sensitive word, that is, perform synonym mining on the target sensitive word, and the user does not need to brainstorm a large quantity of sensitive words. Therefore, the method is not only applicable to a simple scenario, but also applicable to a scenario in which sensitive data is complex and cumbersome. In addition, synonym mining is performed on the target sensitive word, so that comprehensiveness of the sensitive word can be ensured, and a good sensitive data identification effect can be ensured.

The following describes a process of generating a sensitive data identification model by using an example.

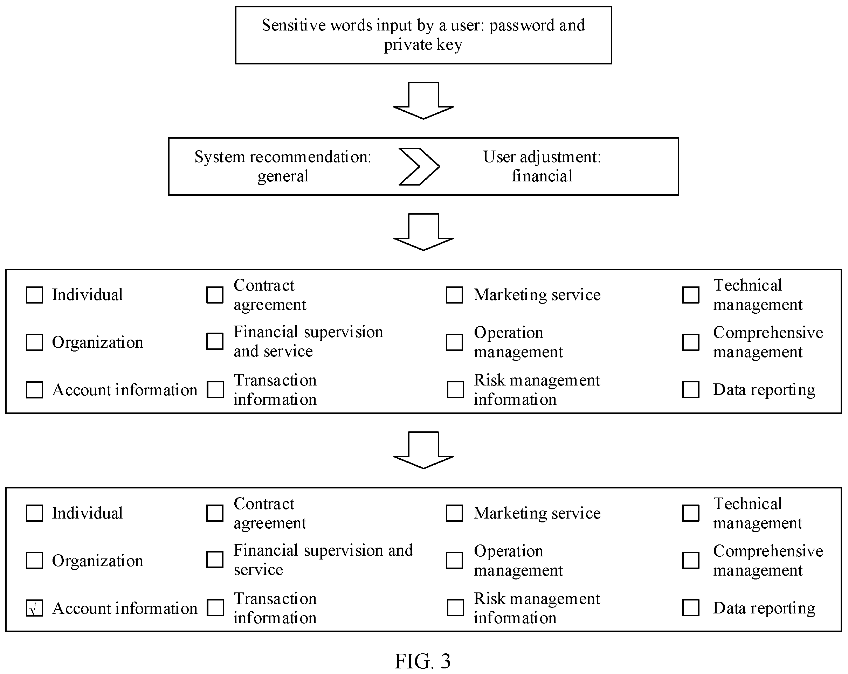

Refer to FIG. 3. Sensitive words input by a bank user are a password and a private key. The password and the private key belong to a same industry. Therefore, it is determined that the target sensitive word is the password and the private key. It is assumed that the electronic device determines that the industry to which the target sensitive word belongs is a common industry, in other words, an industry recommended by a system is the common industry. The user may adjust the industry to which the target sensitive word belongs to a financial industry. After determining the industry to which the target sensitive word belongs, the electronic device provides 12 candidate sensitive categories for the user based on data related to the financial industry in the industry sensitive data grading/classification library, which are respectively an individual, an organization, account information, a contract agreement, financial supervision and service, transaction information, a marketing service, operation management, risk management information, technical management, comprehensive management, and data reporting. It is assumed that the user selects a sensitive category, namely, account information, as the sensitive category corresponding to the sensitive word set.

As shown in Table 2, it is assumed that N=10. For each sensitive word in the target sensitive word, first 10 candidate words are separately selected as candidate synonyms in descending order of similarities between the sensitive word and the candidate synonyms of the sensitive word, to obtain 20 candidate synonyms in total. 10 candidate synonyms of the sensitive word "password" are key, encryption, token, account, account, private key, decryption, password protection, secret key, and new password. Similarities between the 10 candidate synonyms and the sensitive word "password" are respectively 0.660303, 0.658137, 0.656036, 0.647091, 0.638370, 0.619618, 0.601954, 0.599758, 0.596428 and 0.593554. 10 candidate synonyms of the sensitive word "private key" are key, public key, ciphertext, digital signature, secret key, encryption algorithm, public key, digital certificate, identity authentication, and plaintext. Similarities between the 10 candidate synonyms and the sensitive word "password" are respectively 0.784759, 0.762709, 0.760382, 0.715218, 0.683981, 0.679680, 0.679581, 0.659299, 0.645703 and 0.625512.

**Table 2**

| Password | | Private key | |
|---|---|---|---|
| Key | 0.660303 | Key | 0.784759 |
| Encryption | 0.658137 | Public key | 0.762709 |
| Token | 0.656036 | Ciphertext | 0.760382 |
| Account | 0.647091 | Digital signature | 0.715218 |
| Account | 0.638370 | Secret key | 0.683981 |
| Private key | 0.619618 | Encryption algorithm | 0.679680 |
| Decryption | 0.601954 | Public key | 0.679581 |
| Password protection | 0.599758 | Digital certificate | 0.659299 |
| Secret key | 0.596428 | Identity authentication | 0.645703 |
| New password | 0.593554 | Plaintext | 0.625512 |

Deduplication and occurrence frequency statistics are performed on the 20 candidate synonyms in Table 2, and similarities corresponding to the 20 candidate synonyms are corrected in an arithmetic average manner. It is assumed that K=10, and 10 candidate synonyms are determined from the 20 candidate synonyms based on corrected similarities corresponding to the 20 candidate synonyms and the occurrence frequency of each candidate synonym. Then, the user may perform selection on the 10 candidate synonyms based on a requirement, to obtain synonyms of the target sensitive word shown in Table 3. Each of occurrence frequencies of key, secret key, and encryption is 2, and corresponding similarities are 0.722531, 0.640205, and 0.668902 respectively. Each of occurrence frequencies of public key, ciphertext, digital signature, public key, and digital certificate is 1, and corresponding similarities are 0.762709, 0.760382, 0.715218, 0.679581 and 0.659299 respectively.

**Table 3**

| Synonyms of the target sensitive word | Similarity | Occurrence frequency |
|---|---|---|
| Key | 0.722531 | 2 |
| Public key | 0.762709 | 1 |
| Ciphertext | 0.760382 | 1 |
| Digital signature | 0.715218 | 1 |
| Secret key | 0.640205 | 2 |
| Encryption | 0.668909 | 2 |
| Public key | 0.679581 | 1 |
| Digital certificate | 0.659299 | 1 |

The synonyms of the target sensitive word and the target sensitive word jointly form the sensitive word set of the target sensitive word. A sensitivity level recommended by the electronic device based on a sensitive category "account information" of the target sensitive word is a level 3, and if the user considers that the sensitive data is important, the user may independently adjust the sensitivity level upward to a level 4. The electronic device may further store the sensitive word set of the target sensitive word, and the sensitive category and/or the sensitivity level corresponding to the sensitive word set, to obtain a sensitive data identification model generated by the user.

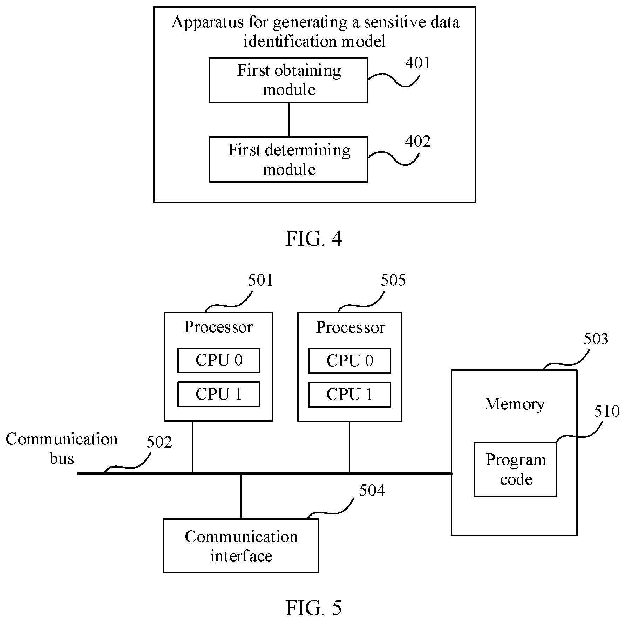

FIG. 4 is a diagram of a structure of an apparatus for generating a sensitive data identification model according to an embodiment of this application. The apparatus for generating a sensitive data identification model may be implemented as a part or all of an electronic device by using software, hardware, or a combination thereof. Refer to FIG. 4. The apparatus includes a first obtaining module 401 and a first determining module 402.

The first obtaining module 401 is configured to obtain a target sensitive word. For a detailed implementation process, refer to corresponding content in the foregoing embodiments. Details are not described herein again.

The first determining module 402 is configured to determine a sensitive data identification model corresponding to the target sensitive word, where the sensitive data identification model includes a sensitive word set of the target sensitive word and a sensitivity level and/or a sensitive category corresponding to the sensitive word set. The sensitive word set includes the target sensitive word and a synonym of the target sensitive word, and the sensitive word set is determined based on an industry to which the target sensitive word belongs. For a detailed implementation process, refer to corresponding content in the foregoing embodiments. Details are not described herein again.

Optionally, the apparatus further includes:
a second determining module, configured to determine, based on the industry to which the target sensitive word belongs, the sensitive category corresponding to the sensitive word set; and
a third determining module, configured to determine, based on the sensitive category corresponding to the sensitive word set, the sensitivity level corresponding to the sensitive word set.

Optionally, the second determining module is specifically configured to:
obtain a plurality of candidate sensitive categories from an industry sensitive data classification library based on the industry to which the target sensitive word belongs;
display the plurality of candidate sensitive categories; and
obtain a candidate sensitive category selected by a user from the plurality of candidate sensitive categories, and use the candidate sensitive category selected by the user as the sensitive category corresponding to the sensitive word set.

Optionally, the third determining module is specifically configured to:
display a sensitivity level corresponding to the sensitive category; and
obtain a sensitivity level obtained by adjusting the sensitivity level by the user, and use, as the sensitivity level corresponding to the sensitive word set, the sensitivity level obtained through the adjustment by the user.

Optionally, the sensitive data identification model further includes an identification rule.

Optionally, the apparatus further includes:
a second obtaining module, configured to obtain a plurality of candidate identification rules from the industry sensitive data grading/classification library;
a display module, configured to display the plurality of candidate identification rules; and
a fourth determining module, configured to: obtain a candidate identification rule selected by the user from the plurality of candidate identification rules, and use the candidate identification rule selected by the user as the identification rule included in the sensitive data identification model.

Optionally, the first obtaining module 401 is specifically configured to:
obtain a sensitive word input by the user; and
if the sensitive word input by the user includes a plurality of sensitive words and the plurality of sensitive words belong to a same industry, determine the plurality of sensitive words as the target sensitive word; or
if the sensitive word input by the user includes a plurality of sensitive words and the plurality of sensitive words do not belong to a same industry, group the plurality of sensitive words into a plurality of groups, and determine a same group of sensitive words as the target sensitive word, where the same group of sensitive words belong to a same industry.

Optionally, the apparatus further includes:
a synonym mining module, configured to perform synonym mining based on the target sensitive word and the industry to which the target sensitive word belongs, to obtain the synonym of the target sensitive word.

Optionally, the synonym mining module includes:
a first determining unit, configured to determine a word vector of the target sensitive word;
an obtaining unit, configured to obtain word vectors of a plurality of candidate words from a word vector library based on the industry to which the target sensitive word belongs; and
a second determining unit, configured to determine the synonym of the target sensitive word based on the word vector of the target sensitive word and the word vectors of the plurality of candidate words.

Optionally, the second determining unit includes:
a first determining subunit, configured to determine, based on the word vector of the target sensitive word and the word vectors of the plurality of candidate words, a similarity between the target sensitive word and each of the plurality of candidate words, to obtain a plurality of similarities;
a selection subunit, configured to select, based on the plurality of similarities, at least one candidate word from the plurality of candidate words as a candidate synonym of the target sensitive word; and
a second determining subunit, configured to determine the synonym of the target sensitive word based on the candidate synonym of the target sensitive word.

Optionally, the second determining subunit is specifically configured to:
determine K candidate synonyms from candidate synonyms of the target sensitive word, where K is an integer greater than 1;
display the K candidate synonyms; and
obtain a candidate synonym selected by the user from the K candidate synonyms, and use the candidate synonym selected by the user as the synonym of the target sensitive word.

Optionally, the target sensitive word includes a plurality of sensitive words, and the second determining subunit is specifically configured to:
perform deduplication and frequency statistics on candidate synonyms of the plurality of sensitive words, to obtain a plurality of candidate synonyms and an occurrence frequency of each candidate synonym;
correct similarities corresponding to the plurality of candidate synonyms; and
determine the K candidate synonyms from the plurality of candidate synonyms based on corrected similarities corresponding to the plurality of candidate synonyms and the occurrence frequency of each candidate synonym.

In this embodiment of this application, a plurality of candidate sensitive categories can be obtained from an industry sensitive data grading/classification library by using an industry to which a target sensitive word belongs, so as to recommend the plurality of candidate sensitive categories to a user. In this way, the user only needs to select a sensitive category corresponding to a sensitive word set from the recommended candidate sensitive categories based on a data security requirement of the user, and then uses a sensitivity level corresponding to the sensitive category as a sensitivity level corresponding to the sensitive word set, and the user does not need to independently set the sensitive category and the sensitivity level according to a data grading/classification principle in laws and regulations. This reduces difficulty in generating a sensitive data identification model. In addition, the method in this embodiment of this application may further extend the target sensitive word, that is, perform synonym mining on the target sensitive word, and the user does not need to brainstorm a large quantity of sensitive words. Therefore, the method is not only applicable to a simple scenario, but also applicable to a scenario in which sensitive data is complex and cumbersome. In addition, synonym mining is performed on the target sensitive word, so that comprehensiveness of the sensitive word can be ensured, and a good sensitive data identification effect can be ensured.

It should be noted that, when the apparatus for generating a sensitive data identification model provided in the foregoing embodiment generates the sensitive data identification model, division into the foregoing functional modules is merely used as an example for description. In an actual application, the foregoing functions may be allocated to different functional modules for implementation based on a requirement. In other words, an internal structure of the apparatus is divided into different functional modules, to complete all or a part of the functions described above. In addition, the apparatus for generating a sensitive data identification model provided in the foregoing embodiment and the embodiment of the method for generating a sensitive data identification model belong to a same concept. For a specific implementation process of the apparatus, refer to the method embodiment. Details are not described herein again.

FIG. 5 is a diagram of a structure of an electronic device according to an embodiment of this application. The electronic device includes at least one processor 501, a communication bus 502, a memory 503, and at least one communication interface 504.

The processor 501 may be a general-purpose central processing unit (central processing unit, CPU), a network processor (network processor, NP), or a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 502 is configured to transfer information between the foregoing components. The communication bus 502 may be classified into an address bus, a data bus, a control bus, and the like. For ease of representation, only one thick line is used to represent the bus in the figure, but this does not mean that there is only one bus or only one type of bus.

The memory 503 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory 503 is not limited thereto. The memory 503 may exist independently, and is connected to the processor 501 through the communication bus 502. Alternatively, the memory 503 may be integrated with the processor 501.

The communication interface 504 is configured to communicate with another device or a communication network by using any apparatus like a transceiver. The communication interface 504 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 501 may include one or more CPUs, for example, a CPU 0 and a CPU 1 in FIG. 5.

In a specific implementation, in an embodiment, the electronic device may include a plurality of processors, for example, the processor 501 and a processor 505 shown in FIG. 5. Each of the processors may be a single-core processor, or may be a multi-core processor. The processor herein may be one or more devices, circuits, and/or processing cores configured to process data (for example, computer program instructions).

In a specific implementation, in an embodiment, the electronic device may further include an output device 506 and an input device 507. The output device 506 communicates with the processor 501, and may display information in a plurality of manners. For example, the output device 506 may be a liquid crystal display (liquid crystal display, LCD), a light emitting diode (light emitting diode, LED) display device, a cathode ray tube (cathode ray tube, CRT) display device, or a projector (projector). The input device 507 communicates with the processor 501, and may receive an input from a user in a plurality of manners. For example, the input device 507 may be a mouse, a keyboard, a touchscreen device, or a sensing device.

In some embodiments, the memory 503 is configured to store program code 510 for executing the solutions of this application, and the processor 501 may execute the program code 510 stored in the memory 503. The program code 510 may include one or more software modules. The electronic device may implement, by using the processor 501 and the program code 510 in the memory 503, the method for generating a sensitive data identification model provided in the foregoing embodiment.

An embodiment of this application further provides a computer-readable storage medium. The storage medium stores instructions, and when the instructions are run on a computer, the computer is enabled to perform steps of the method for generating a sensitive data identification model in the foregoing embodiment.

An embodiment of this application further provides a computer program product including instructions. When the instructions are run on a computer, the computer is enabled to perform steps of the method for generating a sensitive data identification model in the foregoing embodiment. Alternatively, a computer program is provided. When the computer program is run on a computer, the computer is enabled to perform steps of the method for generating a sensitive data identification model in the foregoing embodiment.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases. Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A method for generating a sensitive data identification model, wherein the method comprises:
obtaining a target sensitive word; and
determining a sensitive data identification model corresponding to the target sensitive word, wherein the sensitive data identification model comprises a sensitive word set of the target sensitive word and a sensitivity level and/or a sensitive category corresponding to the sensitive word set, wherein
the sensitive word set comprises the target sensitive word and a synonym of the target sensitive word, and the sensitive word set is determined based on an industry to which the target sensitive word belongs.

2. The method according to claim 1, wherein the method further comprises:
determining, based on the industry to which the target sensitive word belongs, the sensitive category corresponding to the sensitive word set; and
determining, based on the sensitive category corresponding to the sensitive word set, the sensitivity level corresponding to the sensitive word set.

3. The method according to claim 2, wherein the determining, based on the industry to which the target sensitive word belongs, the sensitive category corresponding to the sensitive word set comprises:
obtaining a plurality of candidate sensitive categories from an industry sensitive data grading/classification library based on the industry to which the target sensitive word belongs;
displaying the plurality of candidate sensitive categories; and
obtaining a candidate sensitive category selected by a user from the plurality of candidate sensitive categories, and using the candidate sensitive category selected by the user as the sensitive category corresponding to the sensitive word set.

4. The method according to claim 2 or 3, wherein the determining, based on the sensitive category corresponding to the sensitive word set, the sensitivity level corresponding to the sensitive word set comprises:
displaying a sensitivity level corresponding to the sensitive category; and
obtaining a sensitivity level obtained by adjusting the sensitivity level by the user, and using, as the sensitivity level corresponding to the sensitive word set, the sensitivity level obtained through the adjustment by the user.

5. The method according to any one of claims 1 to 4, wherein the sensitive data identification model further comprises an identification rule.

6. The method according to claim 5, wherein the method further comprises:
obtaining a plurality of candidate identification rules from the industry sensitive data grading/classification library;
displaying the plurality of candidate identification rules; and
obtaining a candidate identification rule selected by the user from the plurality of candidate identification rules, and using the candidate identification rule selected by the user as the identification rule comprised in the sensitive data identification model.

7. The method according to any one of claims 1 to 6, wherein the obtaining a target sensitive word comprises:
obtaining a sensitive word input by the user; and
if the sensitive word input by the user comprises a plurality of sensitive words and the plurality of sensitive words belong to a same industry, determining the plurality of sensitive words as the target sensitive word; or
if the sensitive word input by the user comprises a plurality of sensitive words and the plurality of sensitive words do not belong to a same industry, grouping the plurality of sensitive words into a plurality of groups, and determining a same group of sensitive words as the target sensitive word, wherein the same group of sensitive words belong to a same industry.

8. The method according to any one of claims 1 to 7, wherein the method further comprises:
performing synonym mining based on the target sensitive word and the industry to which the target sensitive word belongs, to obtain the synonym of the target sensitive word.

9. The method according to claim 8, wherein the performing synonym mining based on the target sensitive word and the industry to which the target sensitive word belongs, to obtain the synonym of the target sensitive word comprises:
determining a word vector of the target sensitive word;
obtaining word vectors of a plurality of candidate words from a word vector library based on the industry to which the target sensitive word belongs; and
determining the synonym of the target sensitive word based on the word vector of the target sensitive word and the word vectors of the plurality of candidate words.

10. The method according to claim 9, wherein the determining the synonym of the target sensitive word based on the word vector of the target sensitive word and the word vectors of the plurality of candidate words comprises:
determining, based on the word vector of the target sensitive word and the word vectors of the plurality of candidate words, a similarity between the target sensitive word and each of the plurality of candidate words, to obtain a plurality of similarities;
selecting, based on the plurality of similarities, at least one candidate word from the plurality of candidate words as a candidate synonym of the target sensitive word; and
determining the synonym of the target sensitive word based on the candidate synonym of the target sensitive word.

11. The method according to claim 10, wherein the determining the synonym of the target sensitive word based on the candidate synonym of the target sensitive word comprises:
determining K candidate synonyms from candidate synonyms of the target sensitive word, wherein K is an integer greater than 1;
displaying the K candidate synonyms; and
obtaining a candidate synonym selected by the user from the K candidate synonyms, and using the candidate synonym selected by the user as the synonym of the target sensitive word.

12. The method according to claim 11, wherein the target sensitive word comprises a plurality of sensitive words; and
the determining K candidate synonyms from candidate synonyms of the target sensitive word comprises:
performing deduplication and frequency statistics on candidate synonyms of the plurality of sensitive words, to obtain a plurality of candidate synonyms and an occurrence frequency of each candidate synonym;
correcting similarities corresponding to the plurality of candidate synonyms; and
determining the K candidate synonyms from the plurality of candidate synonyms based on corrected similarities corresponding to the plurality of candidate synonyms and the occurrence frequency of each candidate synonym.

13. An apparatus for generating a sensitive data identification model, wherein the apparatus comprises:
a first obtaining module, configured to obtain a target sensitive word; and
a first determining module, configured to determine a sensitive data identification model corresponding to the target sensitive word, wherein the sensitive data identification model comprises a sensitive word set of the target sensitive word and a sensitivity level and/or a sensitive category corresponding to the sensitive word set, wherein
the sensitive word set comprises the target sensitive word and a synonym of the target sensitive word, and the sensitive word set is determined based on an industry to which the target sensitive word belongs.

14. The apparatus according to claim 13, wherein the apparatus further comprises:
a second determining module, configured to determine, based on the industry to which the target sensitive word belongs, the sensitive category corresponding to the sensitive word set; and
a third determining module, configured to determine, based on the sensitive category corresponding to the sensitive word set, the sensitivity level corresponding to the sensitive word set.

15. The apparatus according to claim 14, wherein the second determining module is specifically configured to:
obtain a plurality of candidate sensitive categories from an industry sensitive data grading/classification library based on the industry to which the target sensitive word belongs;
display the plurality of candidate sensitive categories; and
obtain a candidate sensitive category selected by a user from the plurality of candidate sensitive categories, and use the candidate sensitive category selected by the user as the sensitive category corresponding to the sensitive word set.

16. The apparatus according to claim 14 or 15, wherein the third determining module is specifically configured to:
display a sensitivity level corresponding to the sensitive category; and
obtain a sensitivity level obtained by adjusting the sensitivity level by the user, and use, as the sensitivity level corresponding to the sensitive word set, the sensitivity level obtained through the adjustment by the user.

17. The apparatus according to any one of claims 13 to 16, wherein the sensitive data identification model further comprises an identification rule.

18. The apparatus according to claim 17, wherein the apparatus further comprises:
a second obtaining module, configured to obtain a plurality of candidate identification rules from the industry sensitive data grading/classification library;
a display module, configured to display the plurality of candidate identification rules; and
a fourth determining module, configured to: obtain a candidate identification rule selected by the user from the plurality of candidate identification rules, and use the candidate identification rule selected by the user as the identification rule comprised in the sensitive data identification model.

19. The apparatus according to any one of claims 13 to 18, wherein the first obtaining module is specifically configured to:
obtain a sensitive word input by the user; and
if the sensitive word input by the user comprises a plurality of sensitive words and the plurality of sensitive words belong to a same industry, determine the plurality of sensitive words as the target sensitive word; or
if the sensitive word input by the user comprises a plurality of sensitive words and the plurality of sensitive words do not belong to a same industry, group the plurality of sensitive words into a plurality of groups, and determine a same group of sensitive words as the target sensitive word, wherein the same group of sensitive words belong to a same industry.

20. The apparatus according to any one of claims 13 to 19, wherein the apparatus further comprises:
a synonym mining module, configured to perform synonym mining based on the target sensitive word and the industry to which the target sensitive word belongs, to obtain the synonym of the target sensitive word.

21. The apparatus according to claim 20, wherein the synonym mining module comprises:
a first determining unit, configured to determine a word vector of the target sensitive word;
an obtaining unit, configured to obtain word vectors of a plurality of candidate words from a word vector library based on the industry to which the target sensitive word belongs; and
a second determining unit, configured to determine the synonym of the target sensitive word based on the word vector of the target sensitive word and the word vectors of the plurality of candidate words.

22. The apparatus according to claim 21, wherein the second determining unit comprises:
a first determining subunit, configured to determine, based on the word vector of the target sensitive word and the word vectors of the plurality of candidate words, a similarity between the target sensitive word and each of the plurality of candidate words, to obtain a plurality of similarities;
a selection subunit, configured to select, based on the plurality of similarities, at least one candidate word from the plurality of candidate words as a candidate synonym of the target sensitive word; and
a second determining subunit, configured to determine the synonym of the target sensitive word based on the candidate synonym of the target sensitive word.

23. The apparatus according to claim 22, wherein the second determining subunit is specifically configured to:
determine K candidate synonyms from candidate synonyms of the target sensitive word, wherein K is an integer greater than 1;
display the K candidate synonyms; and
obtain a candidate synonym selected by the user from the K candidate synonyms, and use the candidate synonym selected by the user as the synonym of the target sensitive word.

24. The apparatus according to claim 23, wherein the target sensitive word comprises a plurality of sensitive words; and
the second determining subunit is specifically configured to:
perform deduplication and frequency statistics on candidate synonyms of the plurality of sensitive words, to obtain a plurality of candidate synonyms and an occurrence frequency of each candidate synonym;
correct similarities corresponding to the plurality of candidate synonyms; and
determine the K candidate synonyms from the plurality of candidate synonyms based on corrected similarities corresponding to the plurality of candidate synonyms and the occurrence frequency of each candidate synonym.

25. An electronic device, wherein the electronic device comprises a memory and a processor, the memory is configured to store a computer program, and the processor is configured to execute the computer program, to implement steps of the method for generating a sensitive data identification model according to any one of claims 1 to 12.

26. A computer-readable storage medium, wherein the storage medium stores instructions, and when the instructions are run on a computer, the computer is enabled to perform steps of the method for generating a sensitive data identification model according to any one of claims 1 to 12.

27. A computer program, wherein the computer program comprises instructions, and when the instructions are run on a computer, the computer is enabled to perform steps of the method for generating a sensitive data identification model according to any one of claims 1 to 12.
